# FASCICULE DE BREVET EUROPEEN

(11) **EP 0 526 327 B1**
(45) Date de publication et mention de la délivrance du brevet: **10.05.1995**
(21) Numéro de dépôt: 92402177.7
(22) Date de dépôt: 29.07.1992
(51) Int. Cl.: B60J 1/10

(54) **Vitrage encapsulé et insert utilisé dans ce vitrage**
Eingekapselte Verglasung und Einsatzteil verwendet in dieser Verglasung
Incapsulated glazing and insert for use in this glazing

(30) Priorité: 02.08.1991 FR 9109828
(43) Date de publication de la demande: 03.02.1993
(73) Titulaire: SAINT-GOBAIN VITRAGE, 92400 Courbevoie (FR)
(72) Inventeur: Huchet, Gérard, F-02600 Retheuil (FR); Armand, Philippe, F-75018 Paris (FR)
(74) Mandataire: Le Vaguerèse, Sylvain Jacques

(56) Documents cités:
- EP-A- 0 242 223

## Description

La présente invention concerne un vitrage encapsulé ou surmoulé, sur au moins une partie de sa périphérie, par une matière plastique et, en particulier, un vitrage encapsulé comportant des éléments fonctionnels enrobés au moins partiellement dans la matière plastique lors de l'encapsulation du vitrage.

Les éléments fonctionnels peuvent être des éléments servant à la fixation du vitrage lors de son montage dans la baie de carrosserie. Ce sont alors des vis, des écrous, ... Les éléments fonctionnels peuvent être aussi des éléments servant au fonctionnement du vitrage en cours d'utilisation, par exemple des éléments de guidage, de pivotement, etc...

Ces éléments fonctionnels encapsulés peuvent être soumis à des contraintes diverses lors du montage du vitrage dans la baie de carrosserie ou au cours de l'utilisation dudit vitrage.

Ainsi, lorsque le vitrage encapsulé comporte des systèmes de fixation tels des vis enrobées au moins partiellement dans la matière plastique, ces vis subissent lors du montage du vitrage des contraintes dues au couple de serrage qui peuvent aller jusqu'à provoquer la rupture de la matière plastique enrobant ces vis.

En outre, le positionnement des vis ou des autres éléments fonctionnels sur le substrat avant l'encapsulation nécessite un temps de main d'oeuvre important. De plus, lors de la mise sous pression et la fermeture du moule, les éléments fonctionnels ayant tendance à se déplacer de leur position initiale, il est nécessaire de prévoir un jeu de positionnement important afin d'éviter, par la suite, des difficultés de montage du vitrage.

Le brevet EP-A-0 242 223 divulgue une solution afin de réduire le jeu de positionnement d'un élément de fixation enrobé en partie dans la matière plastique surmoulant un vitrage. Il s'agit d'un moyen de fixation comportant une base de part et d'autre de laquelle se trouvent un moyen d'attache à la baie de carrosserie et des éléments élastiques afin de le maintenir fixe lors de l'injection de la matière plastique. Cependant, le temps de mise en place de tous ces éléments de fixation pour un même vitrage est relativement long. La résistance de la liaison vis/matière plastique n'est pas suffisante lors du serrage de la vis, elle peut être notamment détériorée par le fluage de la matière plastique dans le temps, en particulier lorsque celle-ci est de nature thermoplastique.

La présente invention obvie à ces inconvénients du fait qu'elle a pour objet un vitrage du type divulgué, dans EP-A-0 242 223 et présentant les caracteristiques selon la revendication 1.

Elle concerne un vitrage encapsulé comprenant un substrat transparent, monolithique ou feuilleté, entouré sur au moins une partie de sa périphérie d'un profil en matière plastique obtenu par encapsulation du substrat transparent. Ce vitrage selon l'invention comporte des éléments fonctionnels 4 enrobés au moins partiellement dans la matière plastique 3 lors de l'encapsulation du vitrage, notamment des éléments de fixation utilisables pour le montage du vitrage dans la baie de carrosserie d'un véhicule. Ces éléments fonctionnels 4 sont montés solidairement sur un insert 2 et le long de celui-ci, l'insert 2 étant noyé dans la matière plastique et s'étendant sur au moins une partie de la périphérie du vitrage.

L'insert qui est l'un des objets de l'invention s'étend sur au moins une partie de la périphérie du vitrage encapsulé. Des éléments fonctionnels sont disposés solidairement le long de cet insert. Par exemple, dans le cas d'un vitrage de forme triangulaire, l'insert peut présenter une forme globalement en V s'étendant le long de deux côtés du vitrage, les éléments fonctionnels étant disposés et fixés solidairement sur les branches du V.

Un des avantages selon l'invention est le rassemblement de plusieurs éléments fonctionnels sur un même insert, facilitant la pose de ces éléments dans le moule avant l'injection de la matière plastique, réduisant ainsi le nombre d'opérations de mise en place. On peut donc, selon l'invention, réduire toutes ces opérations à une opération unique.

Un autre avantage de l'invention est une amélioration de la liaison insert-matière plastique du fait de l'importance de la surface de contact insert-matière plastique. La liaison est résistante, par exemple, à un couple de serrage pouvant atteindre la valeur de 3,5 N.m. De plus, la liaison n'est pas altérée par un fluage de la matière plastique. On peut donc utiliser avantageusement, selon l'invention, une matière thermoplastique.

L'insert selon l'invention présente, avantageusement, une relative rigidité et sert de renfort pour la matière plastique.

De plus, les éléments fonctionnels étant montés solidairement sur l'insert, ils sont maintenus de façon constante dans leur position désirée. Le jeu de positionnement, présent dans l'art antérieur, est ainsi réduit, facilitant en conséquence le montage du vitrage encapsulé dans la baie de carrosserie.

L'insert selon l'invention présente, de préférence, une faible épaisseur, inférieure à 1 mm et une largeur inférieure à 20 mm. Une faible largeur autorise la fabrication d'une couche décorative masquant l'insert dans la matière plastique, également d'une largeur réduite.

Avantageusement, l'insert ne s'étend pas sur la totalité de la périphérie du substrat transparent. Par exemple, une forme en V de l'insert est préférée pour un substrat transparent triangulaire réduisant ainsi le coût de l'insert et facilitant sa fabrication.

Selon une forme préférée de l'invention, l'insert présente des formes particulières accentuant le caractère de renforcement de l'insert et le positionnement précis de l'insert dans la matière plastique par rapport au substrat et au moule.

En tant que forme particulière, l'insert peut présenter un ou des bossage(s) sur au moins une partie de sa périphérie. Ces bossages peuvent être longitudinaux ou transversaux.

Un tel bossage constituant une proéminence dans la direction du substrat transparent maintient constante la distance séparant l'insert du substrat. Le jeu de positionnement vis-à-vis du substrat est ainsi réduit. Une proéminence dans la direction opposée, c'est-à-dire dans la direction du moule, fixe la position au cours du moulage de l'insert vis-à-vis du moule en créant un contact insert-moule.

D'autres structures que les bossages permettent également le positionnement précis de l'insert vis-à-vis du substrat et/ou du moule, par exemple des languettes en forme d'ailes remplissent cette fonction. L'insert est ainsi positionné de façon précise vis-à-vis du substrat transparent et/ou du moule lors de l'encapsulation.

Avantageusement, l'insert présente un ou des bossage(s) et des languettes en forme d'ailes dirigées, les unes vers le moule, le ou les autres dirigé(s) vers le substrat ou réciproquement.

Les inventeurs ont montré que la présence de languettes renforcent particulièrement la liaison insert-matière plastique.

D'autres structures, comme par exemple des épaulements, peuvent également être prévues en vue de renforcer la liaison vis-insert.

Avantageusement, ces formes particulières, bossages, épaulements, languettes, languettes en forme d'ailes ou autres formes équivalentes sont obtenues par emboutissage. Un insert en acier, recouvert d'une couche anti-oxydante convient particulièrement selon l'invention. Il présente en effet un faible coût et une rigidité adéquate, à la fois pour jouer un rôle de renfort et être embouti facilement.

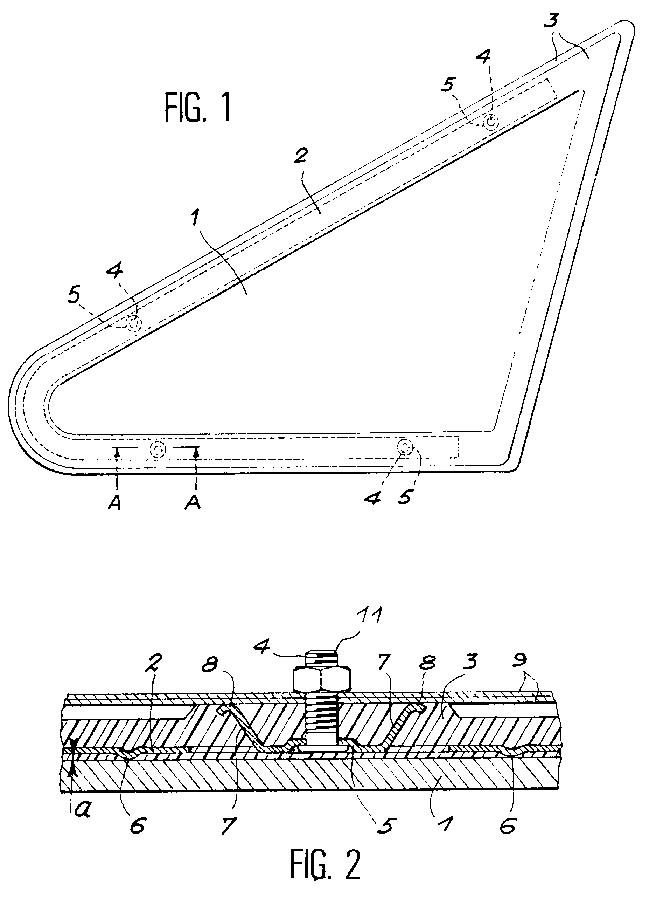

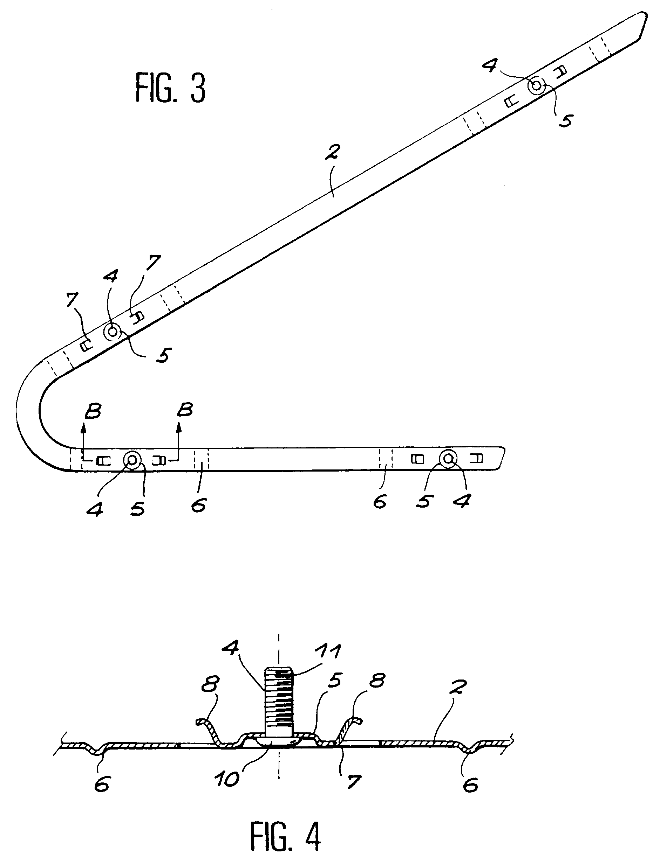

D'autres avantages et caractéristiques de l'invention apparaîtront dans la suite de la description, faite en référence aux figures dans lesquelles :
■ la figure 1 est une vue, en plan, du vitrage encapsulé,
■ la figure 2 est une section longitudinale de la figure 1 selon la ligne A-A,
■ la figure 3 est une vue, en plan, de l'insert selon l'invention,
■ la figure 4 est une vue d'une section de l'insert de la figure 3 selon la ligne B-B.

Sur ces figures, le substrat en verre monolithique trempé 1 est de forme triangulaire. L'insert 2, selon l'invention, s'étend sur deux côtés de ce substrat 1, possédant ainsi une forme globale en V. Plus particulièrement, sur la figure 1, ressort la largeur réduite de l'insert 2. L'insert 2 est enrobé par la matière plastique 3 constituant un profil périphérique du substrat 1, obtenu par encapsulation du substrat.

Quatre éléments de fixation 4, ici des vis, sont répartis le long de l'insert 2 et soudés à lui. L'insert présente des épaulements 5 afin de renforcer la liaison vis 4-insert 2.

Sur la figure 2, les formes particulières de l'insert 2 sont détaillées. L'insert présente des bossages transversaux 6 en contact avec le substrat 1, disposés sur sa longueur, en particulier à proximité des éléments de fixation 4. Ces bossages maintiennent constante la distance a. Deux languettes 7, en forme d'ailes, entourent la vis 4. La partie en forme d'aile 8 qui, au cours du moulage est destinée à venir en contact avec le moule, affleure la surface de la matière plastique 3. Les languettes 7 sont obtenues par découpe par emboutissage de l'insert 2. L'insert est ainsi en contact, au cours du moulage, à la fois avec le substrat transparent et avec le moule, fixant sa position dans la matière plastique.

Sur cette même figure 2, le vitrage encapsulé est représenté monté sur la carrosserie 9. Ce montage s'effectue par vissage d'écrous sur l'extrémité libre des vis 11, la partie enrobée par la matière plastique étant parfaitement maintenue grâce à l'insert et sa structure particulière à proximité des éléments de fixation, notamment grâce aux ailes 8 et aux épaulements 5 entourant la tête 10.

L'insert représenté sur les figures 3 et 4 est en une tôle emboutie en acier zingué d'une épaisseur de 0,8 mm. Sa largeur est de 12 mm. La distance séparant le substrat 1 de l'insert 2 est égale à la hauteur du bossage, c'est-à-dire ici 1,5 mm.

D'autres éléments fonctionnels, tels des éléments de guidage, de pivotement, peuvent aussi être portés solidairement par l'insert selon l'invention.

## Revendications

1. Vitrage encapsulé comprenant un substrat transparent (1) , en verre et/ou en matière plastique, monolithique ou feuilleté, entouré sur au moins une partie de sa périphérie d'un profil (3) en matière plastique obtenu par encapsulation du substrat transparent, ce vitrage encapsulé comportant des éléments fonctionnels (4) enrobés, au moins partiellement, dans la matière plastique (3) lors de l'encapsulation du vitrage, notamment des éléments de fixation utilisables pour le montage du vitrage dans la baie de carrosserie d'un véhicule, caractérisé en ce que les éléments fonctionnels (4) sont montés solidairement sur un insert (2) et le long de celui-ci, l'insert (2) étant noyé dans la matière plastique et s'étendant sur au moins une partie de la périphérie du vitrage.

2. Vitrage selon la revendication 1, caractérisé en ce que l'insert présente un ou des bossages transversaux (6) sur au moins une partie de sa périphérie.

3. Vitrage selon la revendication 1, caractérisé en ce que l'insert présente un ou des bossages longitudinaux sur au moins une partie de sa périphérie.

4. Vitrage selon la revendication 2 ou la revendication 3, caractérisé en ce que le bossage (6) maintient fixe la position de l'insert (2) dans la matière plastique par rapport au substrat (1).

5. Vitrage selon la revendication 3, caractérisé en ce que le bossage longitudinal renforce l'insert.

6. Vitrage selon l'une des revendications 2 à 5, caractérisé en ce que les bossages sont obtenus par emboutissage.

7. Vitrage selon l'une des revendications précédentes, caractérisé en ce que l'insert (2) présente au moins une languette (7).

8. Vitrage selon la revendication 7, caractérisé en ce que la ou les languettes (7) renforce(nt) la matière plastique obtenue par encapsulation.

9. Vitrage selon la revendication 8, caractérisé en ce que l'ensemble des languettes est obtenu par emboutissage.

10. Vitrage selon la revendication 9, caractérisé en ce qu'au moins une languette est en forme d'aile (8).

11. Vitrage selon la revendication 10, caractérisé en ce que la forme d'aile maintient la position de l'insert fixe dans la matière plastique.

12. Vitrage selon la revendication 1, caractérisé en ce que les éléments de fixation sont des vis ou des écrous.

13. Vitrage selon la revendication 1, caractérisé en ce que la matière plastique est du type thermoplastique.

14. Insert métallique sur lequel sont montés, solidairement, au moins deux éléments de fixation, destiné à être utilisé dans le vitrage encapsulé selon l'une des revendications 1 à 13.

## Claims

1. Encapsulated pane comprising a monolithic or laminated transparent substrate (1) of glass and/or of plastics material, surrounded along at least a portion of its periphery with a profile (3) of plastics material obtained by encapsulation of the transparent substrate, this encapsulated pane comprising functional elements (4) coated at least partly in the plastics material (3) during the encapsulation of the pane, notably fixing elements that may be used for the mounting of the pane in a bodywork opening of a vehicle, characterized in that the functional elements (4) are mounted firmly on an insert (2) and along this insert, the insert (2) being embedded in the plastics material and extending over at least a portion of the periphery of the pane.

2. Pane according to Claim 1, characterized in that the insert has one or more transverse bosses (6) over at least a portion of its periphery.

3. Pane according to Claim 1, characterized in that the insert has one or more longitudinal bosses over at least a portion of its periphery.

4. Pane according to Claim 2 or Claim 3, characterized in that the boss (6) maintains the position of the insert (2) fixed in the plastics material relative to the substrate (1).

5. Pane according to Claim 3, characterized in that the longitudinal boss reinforces the insert.

6. Pane according to one of Claims 2 to 5, characterized in that the bosses are produced by pressing or swaging.

7. Pane according to one of the preceding Claims, characterized in that the insert (2) has at least one tongue (7).

8. Pane according to Claim 7, characterized in that the tongue or tongues (7) reinforce the plastics material produced by encapsulation.

9. Pane according to Claim 8, characterized in that the assembly of the tongues is produced by pressing or swaging.

10. Pane according to Claim 9, characterized in that at least one tongue is flange-shaped (8).

11. Pane according to Claim 10, characterized in that the flange shape keeps the insert fixed in position in the plastics material.

12. Pane according to Claim 1, characterized in that the fixing elements are screws or nuts.

13. Pane according to Claim 1, characterized in that the plastics material is of the thermoplastic type.

14. Metallic insert on which are firmly mounted at least two fixing elements, intended for use in the encapsulated pane according to one of Claims 1 to 13.

## Patentansprüche

1. Ummantelte Verglasung, umfassend ein durchsichtiges Einscheiben- oder Verbundsubstrat (1) aus Glas und/oder Kunststoff, das in wenigstens einem Teil seines Umfangs von einem durch Ummanteln des durchsichtigen Substrats hergestellten Profil (3) aus Kunststoff umgeben ist, wobei diese ummantelte Verglasung Funktionselemente (4), die während der Ummantelung der Verglasung wenigstens teilweise von dem Kunststoff (3) umhüllt werden, insbesondere Befestigungselemente enthält, die für den Einbau der Verglasung in die Karosserieöffnung eines Fahrzeugs verwendbar sind, **dadurch gekennzeichnet, daß** die Funktionselemente (4) fest auf einem Einsatz (2) und über dessen Länge angeordnet sind, wobei der Einsatz (2) in den Kunststoff eingebettet ist und sich über wenigstens einen Teil des Umfangs der Verglasung erstreckt.

2. Verglasung nach Anspruch 1**, dadurch gekennzeichnet, daß** der Einsatz in wenigstens einem Teil seines Umfangs eine oder mehrere Quersicken (6) aufweist.

3. Verglasung nach Anspruch 1, **dadurch gekennzeichnet, daß** der Einsatz in wenigstens einem Teil seines Umfangs eine oder mehrere Längssicken (6) aufweist.

4. Verglasung nach Anspruch 2 oder 3, **dadurch gekennzeichnet, daß** durch die Sicke (6) die Lage des Einsatzes (2) im Kunststoff in bezug auf das Substrat (1) festgehalten wird.

5. Verglasung nach Anspruch 3, **dadurch gekennzeichnet, daß** der Einsatz durch die Längssicke verstärkt wird.

6. Verglasung nach einem der Ansprüche 2 bis 5, **dadurch gekennzeichnet, daß** die Sicken durch Tiefziehen hergestellt worden sind.

7. Verglasung nach einem der vorhergehenden Ansprüche, **dadurch gekennzeichnet, daß** der Einsatz (2) wenigstens eine Lasche (7) aufweist.

8. Verglasung nach Anspruch 7, **dadurch gekennzeichnet, daß** die Lasche/n (7) den durch Ummantelung erhaltenen Kunst-stoff verstärkt/verstärken.

9. Verglasung nach Anspruch 8, **dadurch gekennzeichnet, daß** die Einheit aus Laschen durch Tiefziehen hergestellt ist.

10. Verglasung nach Anspruch 9, **dadurch gekennzeichnet, daß** wenigstens eine Lasche die Form eines Flügels (8) besitzt.

11. Verglasung nach Anspruch 10, **dadurch gekennzeichnet, daß** durch die Flügelform die Lage des Einsatzes im Kunststoff festgehalten wird.

12. Verglasung nach Anspruch 1, **dadurch gekennzeichnet, daß** die Befestigungselemente Schrauben oder Muttern sind.

13. Verglasung nach Anspruch 1, **dadurch gekennzeichnet, daß** der Kunststoff thermoplastisch ist.

14. Metalleinsatz, auf welchem wenigstens zwei Befestigungselemente unverlierbar befestigt sind und der dazu bestimmt ist, in der ummantelten Verglasung nach einem der Ansprüche 1 bis 13 verwendet zu werden.
